# EUROPÄISCHE PATENTANMELDUNG

(11) **EP 1 900 439 A1**
(43) Veröffentlichungstag der Anmeldung: **19.03.2008**
(21) Anmeldenummer: 06076749.8
(22) Anmeldetag: 18.09.2006
(51) Int. Cl.: B05B 15/04, C23C 14/04, C23C 16/04, C25D 5/02

(54) **Grünling aus polymerkeramischem Material und Verfahren zum Verschliessen von Öffnungen in Bauteilen**

(71) Anmelder: SIEMENS AKTIENGESELLSCHAFT, 80333 München (DE)
(72) Erfinder: Jabado, Rene, 14199 Berlin (DE); Jensen, Jens Dahl, 14050 Berlin (DE); Krüger, Ursus, 14089 Berlin (DE); Körtvelyessy, Daniel, 13469 Berlin (DE); Lüthen, Volkmar, 12157 Berlin (DE); Reiche, Ralph, 13465 Berlin (DE); Rindler, Michael, 15566 Schöneiche (DE); Ullrich, Raymond, 14621 Schönwalde (DE)

(57) **Zusammenfassung**

Es wird ein Grünling (1) aus polymerkeramischem Material, welches zum Einbringen in Öffnungen von zu beschichtenden Bauteilen und zum Verschließen der Öffnungen während eines Beschichtungsprozesses geeignet ist, zur Verfügung gestellt. Der Grünling (1) umfasst eine Anzahl von Einsteckelementen (3) und einen die Einsteckelemente (3) verbindenden Steg.

## Beschreibung

Die vorliegende Erfindung betrifft einen Grünling aus polymerkeramischem Material, welches zum Einbringen in Öffnungen von zu beschichtenden Bauteilen und zum Verschließen der Öffnungen während eines Beschichtungsprozesses geeignet ist. Daneben betrifft die Erfindung ein Verfahren zum Verschließen von Öffnungen von Bauteilen, um die Öffnungen während eines Beschichtungsprozesses zu schützen.

Beim Herstellen von Bauteilen mit einer Beschichtung und durch die Bauteilwand hindurchführenden Öffnungen können die Öffnungen nach dem Beschichten des Bauteils in das Bauteil eingebracht werden. Es kommt jedoch auch vor, dass die Öffnungen bereits vor dem Beschichtungsprozess im Bauteil vorhanden sind, beispielsweise um ein nachträgliches Bohren durch die Beschichtung zu vermeiden. Im letzteren Fall sind die Öffnungen vor dem Aufbringen der Beschichtung vor einem Eindringen von Beschichtungsmaterial in die Öffnungen zu schützen. Ein solches Eindringen würde die vorhandenen Öffnungen zusetzen und ein Wiederöffnen nach der Beschichtung nötig machen, so dass der Vorteil des Einbringens vor dem Beschichten hinfällig wäre.

Auch ein Wiederbeschichten von Bauteilen, deren ursprüngliche Beschichtung im Rahmen eines Wiederaufarbeitungsprozesses entfernt worden ist, macht ein Verschließen der bereits im Bauteil vorhandenen Öffnungen notwendig. Als Beispiel sei hier das Wiederaufbereiten (Refurbishment) von Turbinenbauteilen, etwa Turbinenschaufeln, mit Kühlluftöffnungen genannt. Bei diesen ist die Beschichtung nach einer bestimmten Betriebsdauer aufgrund der oxidierenden und korrosiven Eigenschaften des durch eine Gasturbine strömenden heißen Verbrennungsabgases so weit verschlissen, dass sie abgetragen werden muss. Danach wird eine neue Beschichtung aufgebracht, so dass das Bauteil erneut in der Turbine zum Einsatz kommen kann. Beim Wiederbeschichten durch Beschichtungsmaterial verschlossene Kühlluftbohrungen müssen aufwendig von Hand wieder geöffnet werden. Dies ist zeit- und kostenintensiv.

Bisher werden Kühlluftbohrungen beim Wiederbeschichten geschützt, indem entweder eine Paste in die Kühlluftbohrungen eingestrichen wird oder stiftförmige Grünlinge individuell von Hand in die Bohrungen eingeführt werden. Ein derartiges Verfahren ist beispielsweise in JP 2001349201 A beschrieben. Auch das Einbringen der Paste bzw. der Grünlinge in die Kühlluftbohrungen ist arbeitsintensiv.

Aufgabe der vorliegenden Erfindung ist es daher, einen Grünling zur Verfügung zu stellen, der das Verschließen von Öffnungen in Bauteilen vor einem Beschichtungsprozess mit weniger Arbeitsaufwand ermöglicht.

Es ist eine weitere Aufgabe der vorliegenden Erfindung, ein Verfahren zum Verschließen von Öffnungen von Bauteilen, um die Öffnungen während eines Beschichtungsprozesses zu schützen, zur Verfügung zu stellen, welches gegenüber den eingangs genannten Verfahren weniger arbeitsintensiv ist.

Die erste Aufgabe wird durch einen Grünling nach Anspruch 1 gelöst, die zweite Aufgabe durch ein Verfahren nach Anspruch 6. Die abhängigen Ansprüche enthalten vorteilhafte Weiterbildungen der Erfindung.

Ein erfindungsgemäßer Grünling besteht aus polymerkeramischem Material, welches zum Einbringen in die Öffnungen von zu beschichtenden Bauteilen und zum Verschließen der Öffnungen während eines Beschichtungsprozesses geeignet ist. Er weist eine Anzahl von Einsteckelementen und einen die Einsteckelemente verbindenden Steg auf. Die Anordnung der Einsteckelemente an dem Steg kann insbesondere an die Anordnung der zu verschließenden Öffnungen im Bauteil angepasst sein.

Mit dem erfindungsgemäßen Grünling braucht nicht mehr in jede Öffnung individuell ein Grünling eingeführt werden. Mit dem erfindungsgemäßen Grünling können stattdessen in einem Arbeitsschritt gleichzeitig mehrere Einsteckelemente in Öffnungen im Bauteil eingesteckt werden. Nachdem die Einsteckelemente in die Öffnungen eingeführt sind, wird der Steg von den Einsteckelementen abgetrennt. Der zum Verschließen der Öffnungen notwendige Zeit- und Arbeitsaufwand kann mit dem erfindungsgemäßen Grünling reduziert werden.

Das Abtrennen des Steges von den Einsteckelementen kann erleichtert werden, wenn zwischen jedem Einsteckelement und dem Steg eine Sollbruchstelle vorhanden ist.

Die Einsteckelemente können als Stifte ausgebildet sein, insbesondere dann, wenn sie an die Kühlluftöffnungen von Turbinenbauteilen, etwa Turbinenschaufeln, angepasst sind.

Im erfindungsgemäßen Verfahren zum Verschließen von Öffnungen von Bauteilen, um die Öffnungen während eines Beschichtungsprozesses zu schützen, werden die Öffnungen mittels eines polymerkeramischen Grünlings verschlossen. Zum Verschließen der Öffnungen kommt ein erfindungsgemäßer Grünling zur Anwendung. Dieser wird mit seinen Einsteckelementen in die Öffnungen eingeführt und danach wird der Steg von den Einsteckelementen abgetrennt. Auf diese Weise können mehrere Öffnungen gleichzeitig, das heißt in einem einzigen Arbeitsschritt, verschlossen werden. Gegenüber den eingangs genannten Verfahren lässt sich daher der Zeit- und Arbeitsaufwand beim Verschließen der Öffnungen reduzieren.

Das Verfahren kann insbesondere als Verfahren zum Verschließen von Kühlluftöffnungen von Turbinenbauteilen vor dem Durchführen eines Beschichtungsprozesses, etwa im Rahmen einer Neubeschichtung oder einer Wiederbeschichtung, ausgestaltet sein.

Weitere Merkmale, Eigenschaften und Vorteile der vorliegenden Erfindung ergeben sich aus der nachfolgenden Beschreibung von Ausführungsbeispielen unter Bezugnahme auf die beiliegenden Figuren.
- Fig. 1: zeigt eine Turbinenschaufel mit Kühlluftöffnungen.
- Fig. 2: zeigt einen erfindungsgemäßen Grünling.

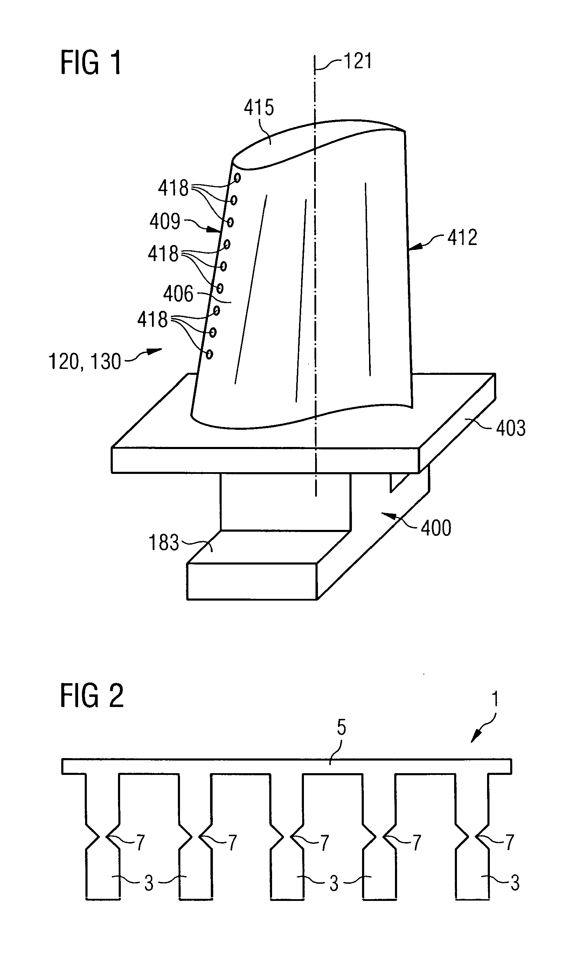

Figur 1 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf. Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt). Der Schaufelfuß 183 ist beispielsweise als Hammerkopf ausgestaltet. Andere Ausgestaltungen als Tannenbaum- oder Schwalbenschwanzfuß sind möglich. Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen, verwendet. Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierung Teil der Offenbarung. Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind. Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt. Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen. Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures). Solche Verfahren sind aus der US-PS 6,024,792 und der EP 0 892 090 A1 bekannt; diese Schriften sind bzgl. des Erstarrungsverfahrens Teil der Offenbarung.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen. Die Dichte liegt vorzugsweise bei 95% der theoretischen Dichte. Auf der MCrAlX-Schicht (als Zwischenschicht oder als äußerste Schicht) bildet sich eine schützende Aluminiumoxidschicht (TGO = thermal grown oxide layer).

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid. Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt. Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Fig. 2 zeigt einen erfindungsgemäßen Grünling mit einer Anzahl von stiftförmigen Einsteckelementen 3, die alle miteinander über einen Steg 5 verbunden sind. Zwischen den Einsteckelementen 3 und dem Steg 5 sind Sollbruchstellen 7 vorhanden, an denen der Steg 5 von dem jeweiligen Einsteckelement 3 leicht abgetrennt werden kann. Der Grünling 1 ist aus einem polymerkeramischen Material hergestellt, welches den beim Beschichten herrschenden Bedingungen Stand hält und die Filmkühlöffnungen vor einem Eindringen von Beschichtungsmaterial zu schützen vermag.

Um das Einbringen der stiftförmigen Einsteckelemente 3 in die Filmkühllöcher 418 der Schaufel 120, 130 in einem einzigen Arbeitsschritt zu ermöglichen, ist die Form des Steges 5 und die Anordnung der Einsteckelemente 3 an dem Steg an die Position der Filmkühllöcher 418 in der Turbinenschaufel 120, 130 angepasst. Auf diese Weise können alle Einsteckelemente 3 in einem einzigen Schritt über den Filmkühllöchern 418 positioniert und anschließend alle gleichzeitig in die Öffnungen eingebracht werden.

Wenn beispielsweise eine Wiederbeschichtung der in Fig. 1 dargestellten Turbinenschaufel erfolgen soll, so wird der Grünling 1 aus Fig. 2 mit seinen stiftförmigen Einsteckelementen 3 in die Filmkühllöcher 418 der Schaufel 120, 130 eingeführt. Danach wird der Steg abgetrennt. Die Filmkühllöcher sind dann durch die in ihnen verbleibenden stiftförmigen Einsteckelemente 3 verschlossen.

Nach dem Wiederbeschichten können die Einsteckelemente 3 mit Hilfe eines geeigneten Lösungsmittels wieder aus den Filmkühlöffnungen 418 entfernt werden.

## Patentansprüche

1. Grünling (1) aus polymerkeramischem Material, welches zum Einbringen in Öffnungen (418) von zu beschichtenden Bauteilen (120, 130) und zum Verschließen der Öffnungen (418) während eines Beschichtungsprozesses geeignet ist, mit einer Anzahl von Einsteckelementen (3) und einem die Einsteckelemente (3) verbindenden Steg.

2. Grünling (1) nach Anspruch 1, in dem die Anordnung der Einsteckelemente (3) an dem Steg (5) an die Anordnung der zu verschließenden Öffnungen im Bauteil angepasst ist.

3. Grünling (1) nach Anspruch 1 oder 2, der jeweils zwischen einem Einsteckelement (3) und dem Steg (5) eine Sollbruchstelle (7) aufweist.

4. Grünling (1) nach einem der Ansprüche 1 bis 3, in dem die Einsteckelemente (3) als Stifte ausgebildet sind.

5. Grünling (1) nach einem der vorangehenden Ansprüche, bei welchem die Einsteckelemente (3) an Kühlluftöffnungen (418) von Turbinenbauteilen (120, 130) angepasst sind.

6. Verfahren zum Verschließen von Öffnungen (418) von Bauteilen (120, 130), um die Öffnungen (418) während eines Beschichtungsprozesses zu schützen, in dem die Öffnungen (418) mittels eines polymerkeramischen Grünlings (1) verschlossen werden, wobei zum Verschließen der Öffnungen (418) ein Grünling (1) nach einem der Ansprüche 1 bis 5 Verwendung findet, der mit seinen Einsteckelementen (3) in die Öffnungen (418) eingeführt wird und dessen Steg (5) nach dem Einführen der Einsteckelemente (3) von diesen abgetrennt wird.

7. Verfahren nach Anspruch 6, **dadurch gekennzeichnet, dass** es als Verfahren zum Verschließen von Kühlluftöffnungen (418) von Turbinenbauteilen (120, 130) vor dem Durchführen eines Beschichtungsprozess ausgestaltet ist.
